# DEMANDE DE BREVET EUROPEEN

(11) **EP 2 034 167 A1**
(43) Date de publication de la demande: **11.03.2009**
(21) Numéro de dépôt: 08163281.2
(22) Date de dépôt: 29.08.2008
(51) Int. Cl.: F02K 9/26, F02K 9/38

(54) **Propulseur optimisé**

(30) Priorité: 07.09.2007 FR 0706278
(71) Demandeur: Protac, 45240 La Ferté Saint Aubin (FR)
(72) Inventeur: ZANELLI, Didier, 45100, ORLEANS (FR)
(74) Mandataire: Bréda, Jean-Marc

(57) **Abrégé**

La présente invention concerne le domaine des propulseurs. Plus particulièrement, ce brevet propose une simplification de l'architecture des propulseurs afin d'en minimiser le nombre d'éléments constitutifs ; l'invention permet en outre au propulseur de disposer d'une interface unique.
Ainsi, l'invention propose de mutualiser au sein d'un boîtier de commande (10) différents moyens, tels qu'un ou des capteur(s) de grandeur physique (CAPT), une alimentation autonome unique (ALI), un dispositif de sécurité de mise à feu (SEC), dans le but d'assurer à la fois une mission de sécurité en environnement normal de détection et de protection en environnement anormal et une mission de surveillance de l'état opérationnel et fonctionnel du propulseur sans nécessiter de redondances de dispositifs ou de capteurs.

## Description

La présente invention concerne le domaine des propulseurs. Plus particulièrement, ce brevet propose une simplification de l'architecture des propulseurs afin d'en minimiser le nombre d'éléments constitutifs. L'invention permet en outre au propulseur de disposer de fonctions supplémentaires et d'une interface unique le reliant par exemple à l'électronique d'un missile.

Actuellement, différents dispositifs et capteurs remplissent diverses missions au sein des propulseurs. Ces missions concernent notamment :
- la détection d'un environnement anormal, pouvant entraîner le déclenchement d'un dispositif modérateur visant notamment à atténuer les risques d'un déclenchement intempestif ou d'une explosion en cas d'incendie, d'échauffement lent, d'impacts de balles...etc.,
- la surveillance de l'état opérationnel et fonctionnel du propulseur, permettant d'estimer la durée de vie restante du propulseur,
- la sécurité de mise à feu, permettant de minimiser le risque d'initiation intempestive en environnement normal.

Pour accomplir ces missions, les propulseurs de l'art connu comportent généralement au moins autant de dispositifs que de missions, chacun d'eux étant constitué d'un ensemble de modules et capteurs. Par exemple, un capteur tel qu'un accéléromètre ou un thermocouple est utilisé pour détecter un environnement anormal tandis qu'un autre, similaire, sert à surveiller l'état opérationnel et fonctionnel du propulseur.

De même, il peut y avoir dans le propulseur un dispositif de sécurité de mise à feu dédié à l'allumeur du propulseur et un second dédié à l'activation du dispositif modérateur.

Par ailleurs, chaque dispositif ou chaque capteur peut nécessiter une alimentation propre ; il y dans ce cas plusieurs dispositifs d'alimentation dans le propulseur.

L'ensemble de ces fonctions entraîne la duplication, ou même la multiplication, de certains modules, composants et capteurs dans les propulseurs actuels.

Ainsi, dans les propulseurs selon l'état de l'art, de nombreux éléments peuvent être présents plusieurs fois. Les inconvénients induits sont essentiellement d'ordre économique, puisque le coût du propulseur est lié au nombre d'éléments qu'il comprend, et technique, du fait de l'augmentation du volume du propulseur complet et d'une certaine baisse de la fiabilité globale en raison de la multiplicité des équipements électroniques.

Afin de pallier cet inconvénient, l'invention propose la mutualisation des modules ou composants du propulseur.

A cet effet, l'invention a pour objet un propulseur comportant :
- un boîtier de commande,
- un allumeur du propulseur,
- un dispositif modérateur, doté d'un initiateur du dispositif modérateur,
- au moins un capteur de grandeur physique,
caractérisé en ce que ledit capteur de grandeur physique assure au moins deux missions parmi les trois missions suivantes :
- estimation de la durée de vie restante du propulseur, correspondant à une mission de surveillance de l'état opérationnel et fonctionnel du propulseur,
- vérification que l'initiation du propulseur est bien demandée dans un environnement normal, prévu pour le propulseur, correspondant à une mission de sécurité du propulseur,
- commande du dispositif modérateur si ladite grandeur physique mesurée dépasse un seuil, correspondant à une mission de détection et de protection en environnement anormal.

Avantageusement, le capteur de grandeur physique permet l'estimation de la durée de vie restante du propulseur, correspondant à une mission de surveillance de l'état opérationnel et fonctionnel du propulseur, et permet par ailleurs de s'assurer que l'initiation du propulseur est bien demandée dans un environnement normal, prévu pour le propulseur.

Avantageusement, le capteur de grandeur physique assure en outre la commande dudit dispositif modérateur si ladite grandeur physique mesurée dépasse un seuil, correspondant à une mission de détection et de protection en environnement anormal.

Avantageusement, le propulseur comporte une alimentation autonome unique, permettant l'alimentation autonome du (des) capteur(s) de grandeur physique.

Avantageusement, l'alimentation autonome unique assure également l'alimentation autonome de l'initiateur du dispositif modérateur.

Avantageusement, le propulseur comprend un accéléromètre, capteur de grandeur physique.

Avantageusement, le propulseur comprend un thermocouple, capteur de grandeur physique.

Avantageusement, le propulseur comprend un capteur de pression, capteur de grandeur physique.

Avantageusement, le propulseur comprend un capteur de contrainte, capteur de grandeur physique.

Avantageusement, le propulseur comprend un capteur de déformation, capteur de grandeur physique.

Avantageusement, le dispositif comporte en outre un unique dispositif de sécurité de mise à feu assurant à la fois la sécurité de mise à feu de l'allumeur du propulseur et la sécurité de mise à feu de l'initiateur du dispositif modérateur du propulseur.

Avantageusement, ledit dispositif de sécurité de mise à feu est un dispositif électronique très haute tension, tel qu'un EFI (pour Exploding Foil Initiator en anglais) ou un slapper, comportant un unique circuit basse tension.

Avantageusement, ledit dispositif de sécurité de mise à feu électronique comporte un unique circuit haute tension.

Avantageusement, ledit dispositif de sécurité de mise à feu électronique comporte une unique capacité de puissance.

Avantageusement, ledit dispositif de sécurité de mise à feu est un dispositif optoélectronique comportant une unique diode laser.

Avantageusement, le dispositif comporte en outre une unité de stockage et de traitement des informations notamment issues du ou des capteurs de grandeur physique.

Avantageusement, l'alimentation autonome unique assure l'alimentation de ladite unité de stockage et de traitement des informations.

Avantageusement, ledit boîtier de commande pilote le capteur de grandeur physique, l'alimentation autonome unique si elle est présente, le dispositif de sécurité de mise à feu s'il est présent et l'unité de stockage et de traitement des informations si elle est présente, constituant ainsi une unique interface du propulseur.

D'autres caractéristiques et avantages de l'invention apparaîtront à l'aide de la description qui suit faite en regard des dessins annexés qui représentent :
- la figure 1 : le schéma de principe d'un propulseur classique, selon l'art connu ;
- la figure 2 : le schéma fonctionnel de la mutualisation des équipements dans un exemple de propulseur selon l'invention ;
- la figure 3 : le schéma de principe d'un exemple de propulseur selon l'invention.

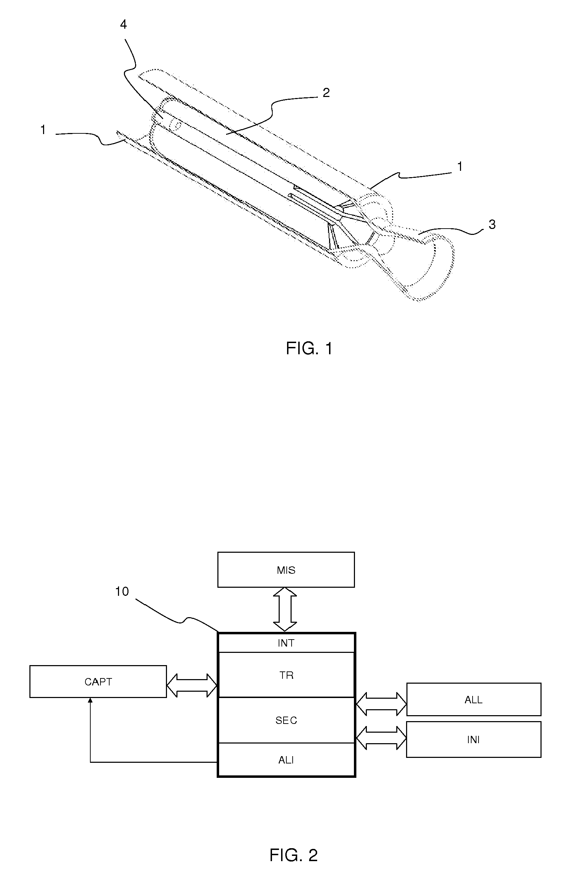

La figure 1 présente un schéma simplifié d'un propulseur de l'art connu. Un propulseur est constitué classiquement de quatre éléments principaux :
- une structure métallique ou composite 1 assurant les fonctions de réservoir de combustible (propergol) et de chambre de combustion ;
- un chargement de propergol solide 2 destiné à fournir en brûlant l'énergie nécessaire au propulseur ;
- une tuyère 3 permettant de fixer les conditions de fonctionnement du propulseur et de générer la force de poussée ;
- un système d'allumage 4 initiant la combustion du chargement de propergol 2, et donc la poussée.

Un tel propulseur peut comprendre en outre différents éléments, dispositifs ou capteurs, permettant d'assurer des missions de sécurité et de surveillance passive, de détection et de protection en environnement anormal ou de surveillance de l'état opérationnel et fonctionnel du propulseur. Dans l'art connu, ces missions et les moyens de les remplir sont indépendants les uns des autres. La présente invention propose de mettre en commun les moyens afin d'assurer l'ensemble des missions à mener à l'aide d'un nombre réduit de modules, composants et capteurs.

Ainsi, la figure 2 représente un schéma fonctionnel de la mutualisation des moyens au sein d'un exemple de propulseur selon l'invention. Un boîtier de commande 10 centralise cette mutualisation des moyens. Le propulseur étant généralement associé à un missile MIS, le boîtier de commande 10 constitue l'interface INT unique entre le propulseur et le missile MIS.

Les grandeurs physiques mesurées par les capteurs de grandeur physique CAPT peuvent être utilisées pour différentes missions. Comparée à des seuils, elles peuvent permettre de détecter un environnement anormal. Par exemple, un thermocouple peut détecter un échauffement rapide (incendie), ou un échauffement lent. Cette même grandeur physique mesurée peut par ailleurs permettre de surveiller l'état opérationnel et fonctionnel du propulseur et d'estimer sa durée de vie restante. Enfin, comparée à un intervalle définissant la plage de fonctionnement normal, elle permet d'interdire la mise à feu en dehors de l'environnement normal, ou de réduire automatiquement la plage de fonctionnement normal du propulseur en fonction de son vieillissement et de sa durée de vie restante. En effet, généralement, on considère que la fiabilité d'un propulseur décroît en fonction de son âge jusqu'à l'expiration de sa durée de vie définie en fonction d'un niveau seuil de fiabilité et/ou de sécurité ; par analyse des grandeurs physiques mesurées, on peut donc réduire la plage de fonctionnement normal du propulseur en fonction de son vieillissement.

Pour assurer en parallèle ces différentes missions, le boîtier de commande 10 comporte une unité de stockage et de traitement des informations TR qui stocke la grandeur physique, l'analyse et peut déclencher si nécessaire les différentes actions énumérées ci-dessus ou, par exemple, activer un dispositif modérateur destiné à atténuer le risque lié au propulseur et au missile MIS.

Le boîtier de commande 10 comporte en outre une alimentation autonome unique ALI permettant notamment d'alimenter le ou les capteur(s) de grandeur physique CAPT.

Enfin, un dispositif de sécurité de mise à feu SEC, également unique, assure la sécurité d'allumage de l'allumeur du propulseur ALL ainsi que la sécurité d'allumage de l'initiateur du dispositif modérateur INI, dans le cas où le propulseur dispose d'un dispositif modérateur.

Ainsi, différents moyens mutualisés, tels que le (les) capteur(s) de grandeur physique CAPT, ou le dispositif de sécurité de mise à feu SEC, permettent d'assurer à la fois une mission de sécurité, une mission de détection et de protection en environnement anormal et une mission de surveillance de l'état opérationnel et fonctionnel du propulseur sans nécessiter de redondances de dispositifs ou de capteurs.

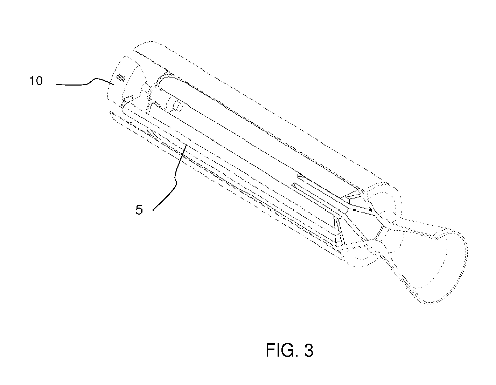

La figure 3 représente de façon simplifiée un exemple de propulseur selon l'invention. Outre le dispositif modérateur 5, qui peut également se trouver dans un propulseur de l'art connu, et qui a pour mission d'atténuer les risques d'explosion intempestive du propulseur et du missile MIS associé en environnement anormal, un boîtier de commande 10 est positionné à l'avant du propulseur. Ce boîtier de commande 10, fonctionnellement décrit en figure 2, assure l'interface unique entre le propulseur et le missile MIS.

En résumé, l'invention a pour principal avantage de minimiser le coût et le volume d'un propulseur, et de maximiser sa fiabilité en optimisant l'utilisation des modules, composants et capteurs en vue d'assurer des missions de sécurité et de surveillance, de détection et de protection en environnement anormal et de surveillance de l'état opérationnel et fonctionnel du propulseur.

## Revendications

1. Propulseur comportant :
• un boîtier de commande (10),
• un allumeur du propulseur (ALL),
• un dispositif modérateur, doté d'un initiateur du dispositif modérateur (INI),
• au moins un capteur de grandeur physique (CAPT),
**caractérisé en ce que** ledit capteur de grandeur physique (CAPT) assure au moins deux missions parmi les trois missions suivantes :
• estimation de la durée de vie restante du propulseur, correspondant à une mission de surveillance de l'état opérationnel et fonctionnel du propulseur,
• vérification que l'initiation du propulseur est bien demandée dans un environnement normal, prévu pour le propulseur, correspondant à une mission de sécurité du propulseur,
• commande du dispositif modérateur si ladite grandeur physique mesurée dépasse un seuil, correspondant à une mission de détection et de protection en environnement anormal.

2. Propulseur selon la revendication 1, **caractérisé en ce que** ledit capteur de grandeur physique (CAPT) permet l'estimation de la durée de vie restante du propulseur, correspondant à une mission de surveillance de l'état opérationnel et fonctionnel du propulseur, et permet par ailleurs de s'assurer que l'initiation du propulseur est bien demandée dans un environnement normal, prévu pour le propulseur.

3. Propulseur selon la revendication 2, **caractérisé en ce que** ledit capteur de grandeur physique (CAPT) assure en outre la commande dudit dispositif modérateur si ladite grandeur physique mesurée dépasse un seuil, correspondant à une mission de détection et de protection en environnement anormal.

4. Propulseur selon l'une quelconque des revendications 1 à 3, **caractérisé en ce qu'**il comporte une alimentation autonome unique (ALI), permettant l'alimentation autonome du (des) capteur(s) de grandeur physique (CAPT).

5. Propulseur selon la revendication 4, **caractérisé en ce que** l'alimentation autonome unique (ALI) assure également l'alimentation autonome de l'initiateur du dispositif modérateur (INI).

6. Propulseur selon l'une quelconque des revendications 1 à 5, **caractérisé en ce qu'**il comprend un accéléromètre, capteur de grandeur physique (CAPT).

7. Propulseur selon l'une quelconque des revendications 1 à 6, **caractérisé en ce qu'**il comprend un thermocouple, capteur de grandeur physique (CAPT).

8. Propulseur selon l'une quelconque des revendications 1 à 7, **caractérisé en ce qu'**il comprend un capteur de pression, capteur de grandeur physique (CAPT).

9. Propulseur selon l'une quelconque des revendications 1 à 8, **caractérisé en ce qu'**il comprend un capteur de contrainte, capteur de grandeur physique (CAPT).

10. Propulseur selon l'une quelconque des revendications 1 à 9, **caractérisé en ce qu'**il comprend un capteur de déformation, capteur de grandeur physique (CAPT).

11. Propulseur selon l'une quelconque des revendications 1 à 10, **caractérisé en ce qu'**il comporte en outre un unique dispositif de sécurité de mise à feu (SEC), et **en ce que** ledit unique dispositif de sécurité de mise à feu (SEC) assure à la fois la sécurité de mise à feu de l'allumeur du propulseur (ALL) et la sécurité de mise à feu de l'initiateur du dispositif modérateur (INI) du propulseur.

12. Propulseur selon la revendication 11, **caractérisé en ce que** ledit dispositif de sécurité de mise à feu (SEC) est un dispositif électronique très haute tension, tel qu'un EFI (pour Exploding Foil Initiator en anglais) ou un slapper, comportant un unique circuit basse tension.

13. Propulseur selon la revendication 12, **caractérisé en ce que** ledit dispositif de sécurité de mise à feu (SEC) électronique comporte un unique circuit haute tension.

14. Propulseur selon la revendication 12, **caractérisé en ce que** ledit dispositif de sécurité de mise à feu (SEC) électronique comporte une unique capacité de puissance.

15. Propulseur selon la revendication 11, **caractérisé en ce que** ledit dispositif de sécurité de mise à feu (SEC) est un dispositif optoélectronique comportant une unique diode laser.

16. Propulseur selon l'une quelconque des revendications 1 à 15, **caractérisé en ce qu'**il comporte en outre une unité de stockage et de traitement des informations (TR) notamment issues du ou des capteurs de grandeur physique.

17. Propulseur selon les revendications 4 et 16, **caractérisé en ce que** l'alimentation autonome unique (ALI) assure l'alimentation de ladite unité de stockage et de traitement des informations (TR).

18. Propulseur selon les revendications 5 et 16, **caractérisé en ce que** l'alimentation autonome unique (ALI) assure l'alimentation de ladite unité de stockage et de traitement des informations (TR).

19. Propulseur selon l'une quelconque des revendications 1 à 18, **caractérisé en ce que** ledit boîtier de commande pilote le capteur de grandeur physique (CAPT), l'alimentation autonome unique (ALI) si elle est présente, le dispositif de sécurité de mise à feu (SEC) s'il est présent et l'unité de stockage et de traitement des informations (TR) si elle est présente, constituant ainsi une unique interface (INT) du propulseur.
